# EUROPEAN PATENT SPECIFICATION

(11) **EP 1 729 979 B1**
(45) Date of publication and mention of the grant of the patent: **29.04.2009**
(21) Application number: 05704672.4
(22) Date of filing: 10.02.2005
(51) Int. Cl.: B60B 1/00

(54) **BICYCLE WHEEL**
FAHRRAD-RAD
ROUE DE BICYCLETTE

(30) Priority: 10.02.2004 PT 10307004
(43) Date of publication of application: 13.12.2006
(73) Proprietor: Rodi - Sinks & Ideas, S.A., 3800 Aveiro (ES)
(72) Inventor: ELMO, Emanuela, I-40064 Ozzano Dell'Emilia (BO) (IT)
(74) Representative: Pereira da Cruz, Jorge Afonso
(86) International application number: PCT/PT2005/000004
(87) International publication number: WO 2005/075218

(56) References cited:
- EP-A- 1 283 112
- WO-A-02/053395
- US-A1- 2003 057 763
- US-B1- 6 517 169

## Description

### BACKGROUND OF THE INVENTION

The present invention relates to a bicycle wheel, in accordance with the characteristics described in the preamble to the main claim.

Bicycle wheels normally consist of an axle hub attached to an outer hub of the wheel by means of a set of spokes. The spokes are habitually arranged according to various patterns and configurations, in order to find the best solution with regard to the properties of resistance, rigidity, oscillation and lightness of the wheel.

### PRIOR ART

A first example of a wheel according to prior art is described in United States patent application no. 2003/0057763. This wheel comprises a first and second set of radial elements that extend respectively from the rim in the direction of the flanges existing at the ends of the axle hub, each of the radial elements being constituted by a single spoke, or more precisely by a pair of parallel spokes. The radial elements extend from the axle hub, symmetrically in relation to the wheel rim, so that each radial element connected to one of the flanges of the wheel hub is situated opposite a corresponding radial element connected to the other flange of the wheel hub. The spokes that constitute the said radial elements are attached to the rim at joining points that are arranged symmetrically on either side of the median plane of the rim and are not aligned therewith. This causes significant difficulty in the manufacture of the wheel, due to the fact that it is necessary to make holes in the double wall rims for the joints on sloping surfaces, into which the heads of the joints are fitted in a less stable way. Furthermore, in the case of this type of wheel, the use of a rim with a simple profile and a flat wall is not recommended, as it is generally less robust and therefore inadequate for supporting concentrated stresses caused by a wheel with few spokes.

A second example of a bicycle wheel is clearly presented in international patent application no. 03/037650. This wheel comprises a first and second set of radial elements, as mentioned in the above example, each of the radial elements being constituted in the same way by a pair of spokes extending from the axle hub and converging on the rim. The radial elements of the first and second set are attached to the rim in an asymmetrical angular position relative to each other and this may cause undesired lateral oscillations of the wheel (particularly the rear wheel) when extreme stress is exerted thereon, for example when cycling uphill or setting off suddenly, since the tension applied to one radial element is not symmetrically counterbalanced by a radial element attached to the other flange.

A third example of a bicycle wheel according to prior art is described in international patent application no. 02/053395. This wheel comprises a rim which is coaxially connected to a hub by means of a plurality of spokes that converge on a pair of flanges that are coaxial to the hub, the flanges comprising coupling lugs distributed on the peripheral region of the flanges and provided with tangential coupling holes, the spokes having an end that engages the holes and an opposite end that is connected to nipples for coupling to the rim.

### SUMMARY OF THE INVENTION

The basic objective of this invention is to devise a bicycle wheel which is structurally and functionally designed to overcome the abovementioned limitations.

This problem is resolved by the present invention, by means of a wheel manufactured in accordance with the claims hereunder.

### BRIEF DESCRIPTION OF THE DRAWINGS

The characteristics and advantages of the invention are more clearly demonstrated in the detailed description of the sample embodiment, which is represented by way of example and non-restrictively in the drawings attached hereto, wherein:

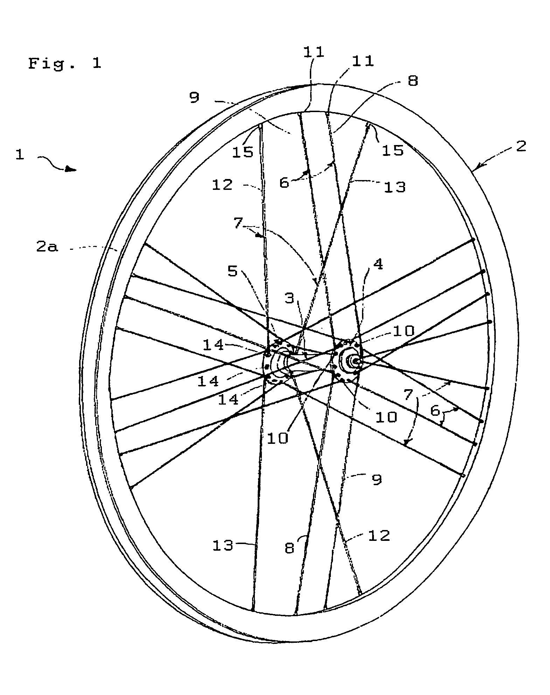

- figure 1 shows a perspective view of a bicycle wheel devised in accordance with this invention, and

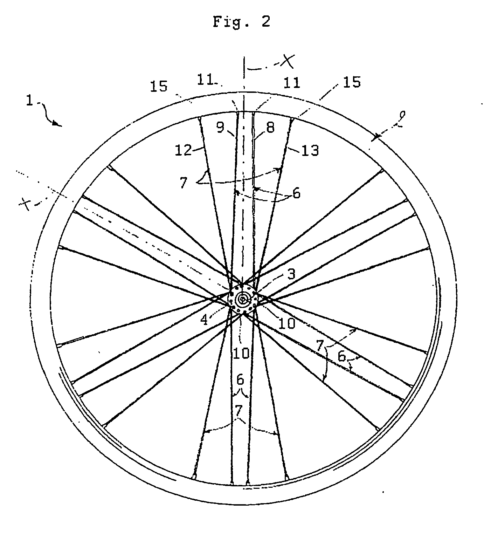

- figure 2 shows a side view of the wheel of figure 1.

### DETAILED DESCRIPTION OF THE INVENTION

In the figures, the number 1 represents a bicycle devised in accordance with the present invention. This wheel can be fitted onto racing bicycles, mountain bicycles or city bicycles.

The wheel 1 consists of a rim 2 with a place for fitting a tyre, which is not shown, and an axle hub 3 situated in the centre of the rim, at the opposite ends of which the coaxial and parallel flanges 4 and 5 are fixed.

The rim 2 is attached to the axle hub by means of a first set of radial elements extending between the rim and the flange 4 and a second set of radial elements extending between the rim and the opposite flange 5.

The wheel 1 preferably has six radial elements 6 and the same number of radial elements 7, which are uniformly spaced.

Each radial element 6 extends along a radial direction X, joining the axle hub 3 to the rim 2, and is constituted by two spokes 8 and 9 attached to the flange 4 and to the rim 2. For this purpose, the flange 4 contains holes 10 arranged in a circular fashion, into which one end of the spokes 8 and 9 is inserted, while the median plane of the rim has holes into which the respective joints 11 are inserted for the other ends of the spokes 8 and 9.

The spokes 8 and 9 extend from opposite sides of the flange 4 almost tangentially in the direction of the respective joints 11, convergently and symmetrically in relation to the radial direction X.

In the same way, each radial element 7 extends along a radial direction X and is constituted by two spokes 12 and 13, which extend from the flange 4 to the rim 2. The spokes 12 and 13 are therefore attached to the flange 5 in the respective holes 14, which are aligned symmetrically to the holes 10 of the flange 4, and in the respective joints 15 situated in holes made in the median plane of the rim 2.

Unlike the spokes 8 and 9, the spokes 12 and 13 extend from the flange 5 in the direction of the rim 2 divergently and symmetrically in relation to the radial direction X. As regards each of the radial directions X, a pair of radial elements is therefore defined, consisting of one radial element 6 and one radial element 7. Since the spokes of the radial elements 6 and 7 extend in the direction of the rim 2 convergently and divergently respectively, the joining points of the former (joints 11) are situated between the joining points of the latter (joints 15).

It is therefore possible to place all the joining points of the spokes along the median plane of the rim 2 and simultaneously achieve perfect symmetry of stresses exerted by the radial elements 6 and 7 of each pair of the respective elements along the radial direction X.

The degree of convergence of the spokes 8 and 9 and the degree of convergence of the spokes 12 and 13 is such that the joining points for each of the respective pairs of radial elements are equidistant from each other at a distance that may vary from 2 to 4 centimetres.

The present invention thus resolves the problem described above and at the same time provides numerous other advantages, including greater rigidity of the wheel and excellent safety in terms of lateral oscillation. The layout of the radial elements also confers on the bicycle wheel according to this invention an attractive aesthetic appearance.

## Claims

1. A bicycle wheel **(1)** comprising a rim **(2),** an axle hub **(3)** with a pair of flanges **(4, 5)** at the opposite ends, a first set of radial elements **(6)** extending between the said **rim (2)** and one of the flanges **(4),** and a second set of radial elements **(7)** extending between the said rim **(2)** and the other flange **(5),** these radial elements being constituted by at least one pair of non-secant spokes **(8, 9; 12, 13)** arranged in such a way as to form pairs of radial elements, in which a radial element of the first set corresponds to a radial element of the second set extending in the same radial direction as the radial element of the first set, **characterised in that** for a pair of corresponding radial elements, the radial element of the said first set is attached to the rim **(2)** by means of joining points **(11)** situated between those **(15)** of the radial element of the second set.

2. A bicycle wheel, according to claim 1, **characterised in that** a pair of spokes **(8, 9; 12, 13)** constitutes each of the said radial elements.

3. A wheel, according to claim 2, **characterised in that** the spokes **(8, 9)** that form the radial element of the said **first** set extend convergent from the said axle hub **(3)** in the direction of the rim **(2).**

4. A wheel, according to claims 2 and 3, **characterised in that** the spokes **(12, 13)** that form the radial element of the said second set extend divergently from the said axle hub **(3)** in the direction of the rim **(2).**

5. A wheel, according to one or more of the preceding claims, **characterised in that** the joining points **(11, 15),** on the rim **(2),** of the spokes **(8, 9; 12, 13)** which form a pair of corresponding radial elements **(6, 7)** are equidistant from each other.

6. A wheel, according to claim 5, **characterised in that** the said joining points **(11, 15)** are equidistant at a distance of between 2 and 4 centimetres.

7. A wheel, according to one or more of the previous claims, **characterised in that** the first and second sets **(6, 7)** each consist of six radial elements forming six pairs of radial elements.

## Patentansprüche

1. Ein Fahrradrad (1) bestehend aus einer Felge (2), einer Achsennabe (3) mit einem Paar Flanschen (4, 5) an gegenüberliegenden Enden, einem ersten Radialelementsatz (6), der von der besagten Felge (2) zu einem der Flanschen (4) verläuft, und einem zweiten Radialelementsatz (7), der von der besagten Felge (2) zu dem anderen Flanschen (5) verläuft, diese Radialelementsätze bestehen aus mindestens einem nicht überschneidenden Speichenpaar (8, 9; 12, 13), das in einer solchen Weise angeordnet ist, so dass sie Radialelementpaare bilden, wo zu jedem Radialelement des ersten Satzes ein Radialelement des zweiten Satzes entspricht, der in die selbe Radialrichtung des ersten Radialelementsatzes verläuft, **dadurch gekennzeichnet, dass** für jedes Radialelementpaar, der besagte erste Radialelementesatz an der Felge (2), durch Verbindungspunkte (11), die zwischen diejenigen (15) des zweiten Radialelementsatzes liegen, verbunden ist.

2. Ein Fahrradrad (1) nach Anspruch 1, **dadurch gekennzeichnet, dass** die besagten Radialelemente jeweils aus einem Speichenpaar (8, 9; 12, 13) bestehen.

3. Ein Rad (1) nach Anspruch 2, **dadurch gekennzeichnet, dass** die Speichen (8, 9), die das Radialelement des besagten ersten Satzes bilden, konvergent von der besagten Achsennabe (3) zur Felge (2) verlaufen.

4. Ein Rad (1) nach Anspruch 2 und 3, **dadurch gekennzeichnet, dass** die Speichen (12, 13), die das Radialelement des besagten zweiten Satzes bilden, divergent von der besagten Achsennabe (3) zur Felge (2) verlaufen.

5. Ein Rad (1) nach einen oder mehreren der vorangehenden Ansprüche, **dadurch gekennzeichnet, dass** die an der Felge (2) liegenden Verbindungpunkte (11, 15) der Speichen (8, 9; 12, 13), die das entsprechende Radialelementpaar (6, 7) bilden, voneinander gleich weit entfernt sind.

6. Ein Rad (1) nach Anspruch 5, **dadurch gekennzeichnet, dass** die besagten Verbindungpunkte (11, 15) gleich weit, mit einem Abstand zwischen 2 und 4 Zentimeter, entfernt sind.

7. Ein Rad (1) nach einem oder mehreren der vorangehenden Ansprüche, **dadurch gekennzeichnet, dass** der erste (6) und der zweite Satz (7) jeweils aus sechs Radialelemente, die sechs Radialelementpaare bilden, bestehen.

## Revendications

1. Une roue de bicyclette (1) comportant une jante (2), un moyeu d'axe (3) avec une paire de boudins (4, 5) aux extrémités opposées, un premier ensemble d'éléments radiaux (6) s'étendant entre ladite jante (2) et l'un des boudins (4), et un deuxième ensemble d'éléments radiaux (7) s'étendant entre ladite jante (2) et l'autre boudin (5), lesdits éléments radiaux étant constitués par au moins une paire de rayons non sécants (8, 9; 12, 13) disposés de manière à former des paires d'éléments radiaux, dans lesquelles un élément radial du premier ensemble correspond à un élément radial du deuxième ensemble qui s'étend dans la même direction radiale que l'élément radial du premier ensemble, **caractérisée en ce que** pour une paire d'éléments radiaux correspondants, l'élément radial dudit premier ensemble est fixé à la jante (2) au moyen de points de jonction (11) situés entre ceux (15) de l'élément radial du deuxième ensemble.

2. Une roue de bicyclette, selon la revendication 1, **caractérisée en ce qu'**une paire de rayons (8, 9; 12, 13) constitue chacun desdits éléments radiaux.

3. Une roue, selon la revendication 2, **caractérisée en ce que** les rayons (8, 9) qui forment l'élément radial dudit premier ensemble s'étendent de façon convergente dudit moyeu d'axe (3) en direction de la jante (2).

4. Une roue, selon les revendications 2 et 3,
**caractérisée en ce que** les rayons (12, 13) qui forment l'élément radial dudit deuxième ensemble s'étendent de façon convergente dudit moyeu d'axe (3) en direction de la jante (2).

5. Une roue, selon une ou plusieurs des revendications précédentes, **caractérisée en ce que** les points de jonction (11, 15), sur la jante (2), des rayons (8, 9; 12, 13) qui forment une paire d'éléments radiaux correspondants (6, 7) sont équidistants entre eux.

6. Une roue, selon la revendication 5, **caractérisée en ce que** lesdits points de jonction (11, 15) sont équidistants à une distance de 2 à 4 centimètres.

7. Une roue, selon une ou plusieurs des revendications précédentes, **caractérisée en ce que** chacun des premier et deuxième ensembles (6, 7) comprend six éléments radiaux formant six paires d'éléments radiaux.
